# EUROPEAN PATENT SPECIFICATION

(11) **EP 2 723 600 B1**
(45) Date of publication and mention of the grant of the patent: **11.03.2015**
(21) Application number: 12733269.0
(22) Date of filing: 15.06.2012
(51) Int. Cl.: B60K 17/34, B60K 23/08

(54) **POWER TRANSFER UNIT FOR ALL-WHEEL DRIVE VEHICLES**
STROMÜBERTRAGUNGSSYSTEM FÜR FAHRZEUGE MIT ALLRADANTRIEB
UNITÉ DE TRANSFERT DE PUISSANCE POUR VÉHICULES À TRANSMISSION INTÉGRALE

(30) Priority: 23.06.2011 US 201161500359 P
(43) Date of publication of application: 30.04.2014
(73) Proprietor: Dana Automotive Systems Group, LLC, Maumee, OH 43537 (US)
(72) Inventor: KINSEY, Gerald, L., Fort Wayne, IN 46818 (US); BEESLEY, Peter, Fort Wayne, IN 46825 (US); SOMMER, Randy, L., Monroeville, IN 46773 (US); KRISHER, James, A., Fort Wayne, IN 46818 (US); PASSINO, Benjamin, J., Maumee, OH 43537 (US); COOPER, Kenneth, E., Toledo, OH 43615 (US)
(74) Representative: Pfenning, Meinig & Partner GbR
(86) International application number: PCT/US2012/042661
(87) International publication number: WO 2012/177504

(56) References cited:
- EP-A2- 1 527 937
- US-A- 4 582 160
- US-A- 5 704 863

## Description

### FIELD OF THE INVENTION

The present invention relates to a power transfer unit for a transmission of an all-wheel drive vehicle having a locking collar for engaging an output shaft.

### BACKGROUND OF THE INVENTION

All wheel drive is a very common feature available on many modern vehicles. The benefits of a vehicle including all wheel drive or part-time all wheel drive are many. The vehicle including all wheel drive may benefit in many ways, such as having increased traction during acceleration, more responsive steering, a more even weight distribution between the front and rear axles, and the ability to traverse uneven and slick terrain when one or more tires lose traction. However, an all wheel drive feature does not come without its disadvantages. The vehicle including all wheel drive is typically more costly than a similar single axle drive vehicle and has a decreased fuel economy (due to an increase in vehicle weight and an increase in drive train windage). As smaller vehicles and front wheel drive vehicles become more popular, so has a demand for such vehicles to include all wheel drive or part-time all wheel drive.

Front wheel drive vehicles typically include a transaxle for driving a front axle and a power transfer unit for driving a rear axle, when such vehicles are equipped for all wheel drive or part-time all wheel drive. Such power transfer units typically employ dog clutch style engagement of the rear axle, requiring the vehicle to be stopped to shift into all wheel drive without damaging the power transfer unit. Alternately, in vehicles having part-time all wheel drive, the power transfer unit and a driveshaft maintain rotation with a primary drive axle, awaiting engagement with a secondary axle until needed. Rotation of the power transfer unit and the driveshaft result in increased drivetrain windage and a decrease in fuel economy.

Power transfer units tend to be bulky, expensive, and heavy. Such concerns pose problems when locating the power transfer unit in smaller and front wheel drive vehicles. Particularly, such vehicles typically have reduced ground clearances and congested engine compartments. Further, cost and weight concerns are more prevalent on smaller vehicles.

It would be advantageous to utilize a power transfer unit for a vehicle that permits "on the fly" shifting to all wheel drive or part-time all wheel drive, is compact and cost effective, and increases the fuel economy of a vehicle the power transfer unit is incorporated in.

Document EP 1 527 937 A2 appears to show a transfer case having an input shaft driven by a powertrain, a first output shaft adapted for connection to a first driveline, a second output shaft adapted for connection to a second driveline, an interaxle differential operably disposed between the input shaft and the first and second output shafts, and a torque transfer mechanism. The torque transfer mechanism includes a friction clutch assembly operably disposed between the first output shaft and the second output shaft, and a clutch actuator assembly for generating and applying a clutch engagement force to the friction clutch assembly. The clutch actuator assembly includes an electric motor, a geared reduction unit, and a clutch apply operator. A control system including vehicle sensors and a controller are provided to control actuation of the electric motor.

Document US 5 704 863 A appears to show an improved power transfer system for use in four-wheel drive vehicles having a transfer case equipped with a torque transfer arrangement that is operable for automatically controlling the drive torque delivered to the front and rear drivelines of the vehicle and establishing an on-demand four-wheel drive mode.

### SUMMARY OF THE INVENTION

Presently provided by the invention, a power transfer unit for a vehicle that permits "on the fly" shifting to all wheel drive or part-time all wheel drive, is compact and cost effective, and increases the fuel economy of a vehicle the power transfer unit is incorporated in, has surprisingly been discovered.

In one embodiment, the present invention is directed towards a power transfer unit for a vehicle comprising a transfer sleeve, a flanged ring gear, an output shaft, and a clutching assembly. The transfer sleeve is drivingly engaged with a carrier of a center differential and the flanged ring gear is concentric with and rotatably journaled about the transfer sleeve. The output shaft is drivingly engaged with the flanged ring gear. The clutching assembly is supported on the transfer sleeve and comprises a locking collar and a clutch. The locking collar is concentric with and axially moveable along the transfer sleeve and has a first position and a second position. The locking collar in the first position drivingly engages the flanged ring gear with the transfer sleeve. The locking collar in the second position disengages the flanged ring gear from the transfer sleeve. The clutch may be variably engaged to transfer a portion of a torque transferred through the carrier of the center differential and the transfer sleeve to the flanged ring gear and the output shaft.

In another embodiment, the present invention is directed towards a power transfer unit for a vehicle comprising an axle shaft, a transfer sleeve, a flanged ring gear, an output shaft, a locking collar, and a clutch. The axle shaft is connected to a center differential at one end and a drive wheel at another end. The transfer sleeve is disposed about the axle shaft and drivingly engaged with a carrier of the center differential. The flanged ring gear is concentric and rotatably journaled about the transfer sleeve and includes a toothed inner surface. The output shaft is drivingly engaged with the flanged ring gear. The locking collar is drivingly engaged with the transfer sleeve and is axially moveable along the transfer sleeve and has a first position and a second position. The locking collar includes a toothed outer surface for drivingly engaging the toothed inner surface of the flanged ring gear. The locking collar is disposed adjacent a first end of the flanged ring gear. The locking collar in the first position drivingly engages the flanged ring gear with the transfer sleeve and the locking collar in the second position disengages the flanged ring gear from the transfer sleeve. A clutch is disposed adjacent a second end of the flanged ring gear. A clutch support plate is drivingly engaged with the flanged ring gear and the clutch. The clutch may be variably engaged to transfer a portion of the torque transferred through the carrier of the center differential and the transfer sleeve to the flanged ring gear and the output shaft.

### BRIEF DESCRIPTION OF THE DRAWINGS

The above, as well as other advantages of the present invention, will become readily apparent to those skilled in the art from the following detailed description when considered in the light of the accompanying drawings in which:
FIG. 1 is a fragmentary, cross-sectional, top elevational view of a power transfer unit for a vehicle according to an embodiment of the present invention;
FIG. 2 is a fragmentary, cross-sectional, top elevational view of a power transfer unit according to another embodiment of the present invention;
FIG. 3 is a fragmentary, cross-sectional, top elevational view of a power transfer unit according to another embodiment of the present invention;
FIG. 4 is a fragmentary, cross-sectional, top elevational view of a power transfer unit according to another embodiment of the present invention; and
FIG. 5 is a fragmentary, cross-sectional, top elevational view of a power transfer unit according to another embodiment of the present invention.

### DETAILED DESCRIPTION OF THE PREFERRED EMBODIMENTS

It is to be understood that the invention may assume various alternative orientations and step sequences, except where expressly specified to the contrary. It is also to be understood that the specific devices and processes illustrated in the attached drawings, and described in the following specification are simply exemplary embodiments of the inventive concepts defined in the appended claims. Hence, specific dimensions, directions or other physical characteristics relating to the embodiments disclosed are not to be considered as limiting, unless the claims expressly state otherwise.

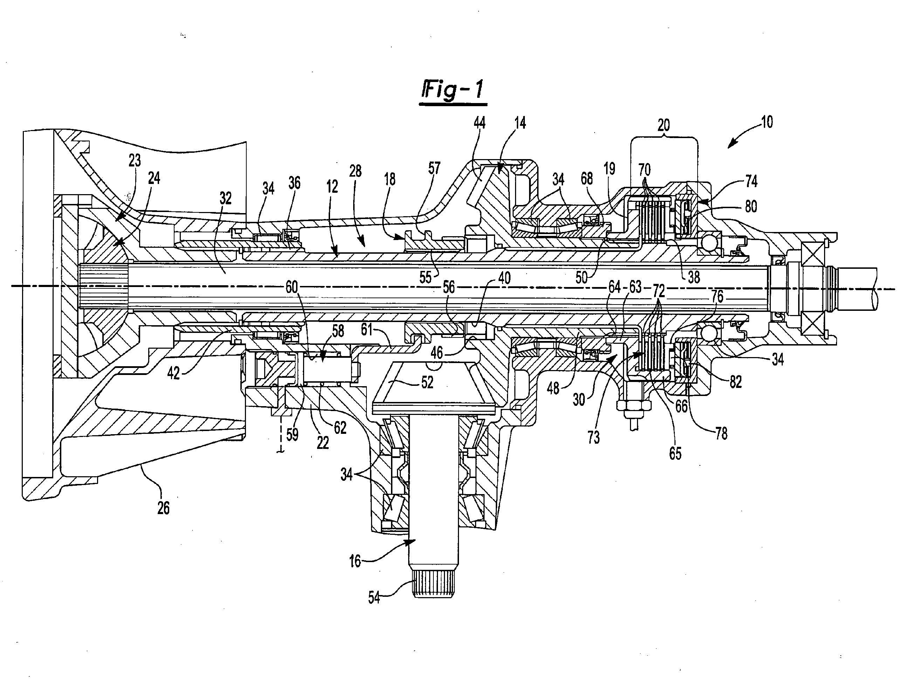

FIG. 1 illustrates a power transfer unit 10 for a vehicle according to an embodiment of the present invention. The power transfer unit 10 includes a transfer sleeve 12, a flanged ring gear 14, an output shaft 16, a locking collar 18, a clutch support plate 19, and a clutch 20, all of which are disposed in a housing 22. Preferably, the components 12, 14, 16, 18, 19 are formed from a hardened steel, however the components 12, 14, 16, 18, 19 may be formed from any other rigid material. The axle shaft is connected to a center differential at one end and a drive wheel at another end (not shown). As shown, the power transfer unit 10 is drivingly engaged with a carrier 23 of a center differential 24 of a transaxle 26, but it is understood the power transfer unit 10 may be drivingly engaged with other vehicle components or may be used in non-vehicular applications.

The housing 22 is a multi-piece casing into which the components 12, 14, 16, 18, 19, 20 are disposed. The housing 22 is formed by casting aluminum. However, it is understood that the housing 22 may be formed from other materials and may be formed using other processes. As illustrated, the housing 22 comprises three portions that define a first cavity 28 and a second cavity 30. The housing 22 is disposed about an axle shaft 32.

The transfer sleeve 12 is a hollow shaft concentrically disposed about the axle shaft 32 through the first cavity 28 and the second cavity 30 of the housing 22. Preferably, the transfer sleeve 12 is a hollow elongate cylindrical member, however the transfer sleeve 12 may be any other shape. Bearings 34 disposed between the transfer sleeve 12 and the housing 22 permit the transfer sleeve 12 to rotate about an axis of the transfer sleeve 12. The axis of the transfer sleeve 12 is concurrent with the axis of the axle shaft 32. The transfer sleeve 12 has a first splined portion 36 formed at a first end thereof, a second splined portion 38 formed at a second end thereof, and a third splined portion 40 formed intermediate the first splined portion 36 and the second splined portion 38. The transfer sleeve 12 is drivingly engaged with the center differential 24 through a coupling sleeve 42. The coupling sleeve 42 has splines engaged with the first splined portion 36 and a splined portion of the carrier 23 of the center differential 24.

The flanged ring gear 14 is a gear concentric with and rotatably journaled about the transfer sleeve 12 in the first cavity 28 and the second cavity 30 of the housing 22. The flanged ring gear 14 has a first end including outer teeth 44 and inner teeth 46 formed thereon. The outer teeth 44 and the inner teeth 46 are respectively formed on inner and outer surfaces of the flanged ring gear 14, but it is understood the teeth 44, 46 may be formed on any surface of the flanged ring gear 14. A flanged portion 48 of the flanged ring gear 14 is a hollow elongate cylindrical member having an axis common with the transfer sleeve 12. Bearings 34 disposed between the flanged portion 48 and the housing 22 permit the flanged ring gear 14 to rotate about an axis of the transfer sleeve 12. A splined ring gear portion 50 is formed in the flanged portion 48 at a second end of the flanged ring gear 14.

The output shaft 16 is a pinion shaft rotatably journaled in the first cavity 28 of the housing 22. The output shaft 16 has a first end including teeth 52 formed thereon and a second end including an output splined portion 54 formed thereon. The teeth 52 form a bevel gear on an outer surface of the output shaft 16, but it is understood the teeth 52 may form any other gear on the output shaft 16. The output shaft 16 is oriented substantially transverse to the transfer sleeve 12, but it is understood that the output shaft 16 may also be positioned parallel to the transfer sleeve 12 or at any other angle to the transfer sleeve 12. Bearings 34 disposed between the output shaft 16 and the housing 22 permit the output shaft 16 to rotate about an axis of the output shaft 16. The output shaft 16 is drivingly engaged with the outer teeth 44 of the flanged ring gear 14. While not shown, the output splined portion 54 is typically fitted with a yoke, a joint, an output gear, a shaft, or the like.

The locking collar 18 is a hollow cylindrical member concentrically disposed on the transfer sleeve 12 adjacent the first end of the flanged ring gear 14 in the first cavity 28. Collectively, the locking collar 18, the clutch support plate 19, and the clutch 20 form a clutching assembly. The locking collar 18 includes inner collar splines 55, outer collar teeth 56, and an actuation groove 57. The inner collar splines 55 are formed on an inner surface of the locking collar 18 and are engaged with the third splined portion 40 of the transfer sleeve 12, and axial movement is afforded therebetween, permitting the locking collar 18 to move along the third splined portion 40 of the transfer sleeve 12. The outer collar teeth 56 are formed on an outer surface of the locking collar 18 and may be engaged with the inner teeth 46 of the flanged ring gear 14. The actuation groove 57 is a circumferential groove formed in the outer surface of the locking collar 18 having a rectangular cross-section; however, any other shape may be used.

A collar actuator 58 is disposed in the housing 22. The collar actuator 58 is a linear style hydraulic actuator disposed adjacent the first cavity 28. Such actuators are commonly known in the art. The collar actuator 58 includes a piston 59 sealingly disposed in a cavity 60 formed in the housing 22 and a shift fork 61 coupled to the collar actuator 58. The cavity 60 is in fluid communication with a high pressure fluid source. Alternately, the collar actuator 58 may be a mechanical actuator, a pneumatic actuator, or an electrical actuator. A biasing member 62 returns the piston 59 to the position illustrated in FIG. 1 when the cavity 60 is not pressurized. The biasing member 62 is a coil spring; however, any other biasing member may be used.

The shift fork 61 is coupled to the collar actuator 58 and partially disposed in the actuation groove 57. The shift fork 61 is a rigid member preferably formed from a steel having a substantially "S" shaped cross-section. An end of the shift fork 61 opposite the collar actuator 58 is bifurcated and has an arcuate shape corresponding to the actuation groove 57.

The locking collar 18 may be positioned in a first position or a second position depending on an actuation of the collar actuator 58. In the first position, the cavity 60 is pressurized and the locking collar 18 is moved towards the flanged ring gear 14 to drivingly engage the outer collar teeth 56 of the locking collar 18 with the inner teeth 46 of the flanged ring gear 14. Accordingly, the flanged ring gear 14 and the transfer sleeve 12 are drivingly engaged, causing the transfer sleeve 12 to rotate concurrently with the flanged ring gear 14. In the second position, the pressure on the cavity 60 is released and the biasing member 62 urges the locking collar 18 away from the flanged ring gear 14, disengaging the locking collar 18 from the flanged ring gear 14. Accordingly, the flanged ring gear 14 is disengaged from the transfer sleeve 12, permitting the transfer sleeve 12 and the flanged ring gear 14 to rotate independently with respect to one another.

The clutch support plate 19 is a hollow cup shaped member concentrically disposed on the splined ring gear portion 50 of the flanged ring gear 14 in the second cavity 30. The clutch support plate 19 is drivingly engaged with the flanged ring gear 14 and the clutch 20. The clutch support plate 19 includes a mounting flange 63 formed therewith having inner plate splines 64. The clutch support plate 19 also includes clutch support splines 65 formed on an outer member 66. The inner plate splines 64 are formed on an inner surface of the clutch support plate 19 and are engaged with the splined ring gear portion 50 of the flanged ring gear 14, drivingly engaging the clutch support plate 19 and the flanged ring gear 14. As shown in FIG. 1, a support plate spacer 68 is disposed on the flanged portion 48 between the clutch support plate 19 and the bearings 34 supporting the flanged ring gear 14. The support plate spacer 68 includes splines engaged with the splined ring gear portion 50 of the flanged ring gear 14 and a seal engaged with the housing 22. The clutch support splines 65 are formed on an inner surface of the outer member 66.

The clutch 20 is a plate style clutch disposed between the clutch support plate 19 and the transfer sleeve 12 adjacent the second end of the flanged ring gear 14 in the second cavity 30. Alternately, the clutch 20 may be any other style of clutch known in the art. The clutch 20 comprises a first plurality of plates 70, a second plurality of plates 72, a clutch actuator 74, a thrust plate 76, and a thrust bearing 78.

The first plurality of plates 70 is drivingly engaged with the clutch support splines 65 formed in the outer member 66 of the clutch support plate 19. Accordingly, the first plurality of plates 70 is drivingly engaged with the flanged ring gear 14. A plurality of tabs formed along an outer peripheral edge of each of the plates 70 corresponds to the clutch support splines 65 formed in the outer member 66. Each of the plates 70 is a clutch plate as is known in the art. As shown, the first plurality of plates 70 includes four plates, however, it is understood that any number of plates may form the first plurality of plates 70.

The second plurality of plates 72 is drivingly engaged with the second splined portion 38 of the transfer sleeve 12. A plurality of tabs formed along an inner peripheral edge of each of the plates 72 corresponds to the second splined portion 38 of the transfer sleeve 12. The second plurality of plates 72 is interleaved with the first plurality of plates 70. Each of the plates 72 is a clutch plate as is known in the art. As shown, the second plurality of plates 72 includes four plates, however, it is understood that any number of plates may form the second plurality of plates 72. The first plurality of plates 70 interleaved with the second plurality of plates 72 is known as a clutch pack 73.

The clutch actuator 74 is a ring style hydraulic actuator. Such actuators are commonly known in the art. The clutch actuator 74 includes a piston 80 and a chamber 82 non-rotatably disposed in the second cavity 30 of the housing 22. The clutch actuator 74 is in fluid communication with a high pressure fluid source. Alternately, the clutch actuator 74 may be a mechanical actuator, a pneumatic actuator, or an electrical actuator.

The thrust plate 76 is a ring shaped plate disposed against the clutch pack 73 and drivingly engaged with the outer member 66. A plurality of tabs formed along an outer peripheral edge of the thrust plate 76 corresponds to the clutch support splines 65 formed in the outer member 66. The thrust plate 76 includes a support flange facing away from the clutch pack 73.

The thrust bearing 78 is a thrust roller bearing as is known in the art. The thrust bearing 78 is disposed between the clutch actuator 74 and the thrust plate 76 and held in position by the support flange of the thrust plate 76. The thrust bearing 78 comprises a plurality of radially spaced cylindrical rollers in a cage, however, other types of bearings may be used.

When the clutch actuator 74 is engaged, the chamber 82 is pressurized and the piston 80 is moved towards the clutch pack 73 to apply pressure to the first plurality of plates 70 and the second plurality of plates 72. The pressure is resisted by the clutch support plate 19 and support plate spacer 68 and the first plurality of plates 70 frictionally engages the second plurality of plates 72. The amount of pressure applied to the clutch pack 73 may be controlled to vary an amount of engagement between the first plurality of plates 70 and the second plurality of plates 72. Accordingly, the flanged ring gear 14 and the transfer sleeve 12 are variably drivingly engaged, transferring a portion of a torque transferred through the carrier 23 of the center differential 24 and the transfer sleeve 12 to the flanged ring gear 14 and the output shaft 16. When the pressure on the chamber 82 is released, the frictional engagement between the first plurality of plates 70 and the second plurality of plates 72 decreases, and the second plurality of plates 72 begins to rotate independently from the first plurality of plates 70. Accordingly, the flanged ring gear 14 is disengaged from the transfer sleeve 12, permitting the transfer sleeve 12 and the flanged ring gear 14 to rotate independently with respect to one another.

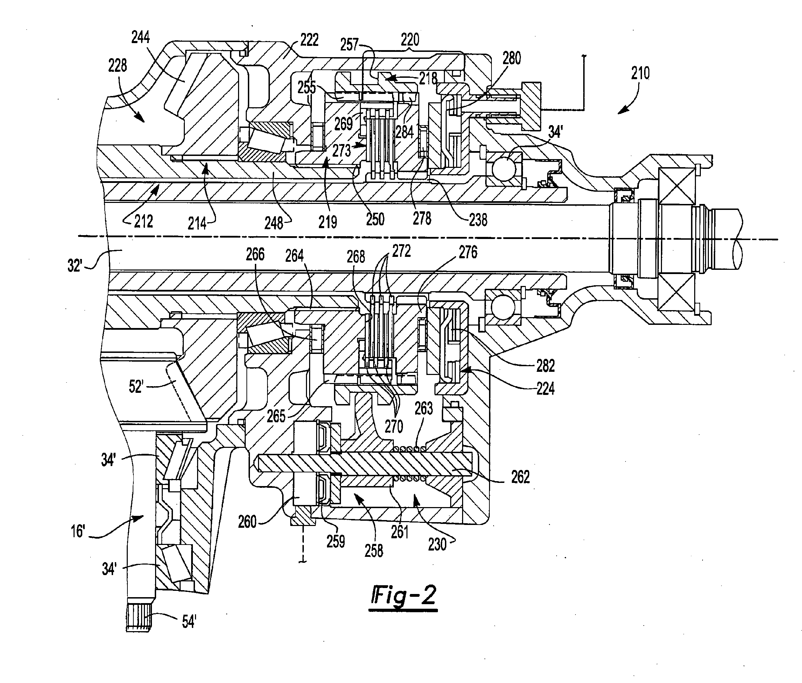

FIG. 2 shows an alternative embodiment of the power transfer unit 10. Similar structural features of the tandem drive axle system include the same reference numeral and a prime (') symbol.

FIG. 2 illustrates a power transfer unit 210 for a vehicle according to an embodiment of the present invention. The power transfer unit 210 includes a transfer sleeve 212, a flanged ring gear 214, an output shaft 16', a locking collar 218, a clutch support plate 219, and a clutch 220 disposed in a housing 222. Preferably, the components 212, 214, 16', 218, 219 are formed from a hardened steel, however the components 212, 214, 16', 218, 219 may be formed from any other rigid material. The power transfer unit 210 is drivingly engaged with a carrier (not shown) of a center differential (not shown) of a transaxle (not shown), but it is understood the power transfer unit 210 may be drivingly engaged with other vehicle components or may be used in non-vehicular applications.

The transfer sleeve 212 is a hollow shaft concentrically disposed about an axle shaft 32' through a first cavity 228 and a second cavity 230 of the housing 222. Preferably, the transfer sleeve 212 is a hollow elongate cylindrical member, however the transfer sleeve 212 may be any other shape. Bearings 34' disposed between the transfer sleeve 212 and the housing 222 permit the transfer sleeve 212 to rotate about an axis of the transfer sleeve 212. The axis of the transfer sleeve 212 is concurrent with the axis of the axle shaft 32'. The transfer sleeve 212 has a first splined portion (not shown) formed at a first end thereof and a second splined portion 238 formed at a second end thereof. The transfer sleeve 212 is drivingly engaged with the center differential through a coupling sleeve (not shown). The coupling sleeve has splines engaged with the first splined portion and a splined portion of the carrier of the center differential.

The flanged ring gear 214 is a gear concentric with and rotatably journaled about the transfer sleeve 212 in the first cavity 228 and the second cavity 230 of the housing 222. As shown in FIG. 2, the flanged ring gear 214 comprises a shaft portion spliningly engaged with a gear portion; however, it is understood that the flanged ring gear 214 may be unitary or may comprise any number of components. The flanged ring gear 214 has a first end including outer teeth 244 formed thereon. The outer teeth 244 are formed on an outer surface of the flanged ring gear 214, but it is understood the outer teeth 244 may be formed on any surface of the flanged ring gear 214. A flanged portion 248 of the flanged ring gear 214 is a hollow elongate cylindrical member having an axis common with the transfer sleeve 212. Bearings 34' disposed between the flanged portion 248 and the housing 222 permit the flanged ring gear 214 to rotate about an axis of the transfer sleeve 212. A toothed engagement portion 250 is formed in the flanged portion 248 at a second end of the flanged ring gear 214.

The locking collar 218 is a hollow cylindrical member concentrically disposed on the clutch support plate 219 adjacent the second end of the flanged ring gear 214 in the second cavity 230. Collectively, the locking collar 218, the clutch support plate 219, and the clutch 220 form a clutching assembly. The locking collar 218 includes inner collar teeth 255 and an actuation groove 257. The inner collar teeth 255 are formed on an inner surface of the locking collar 218 and are engaged with collar support teeth 265 of the clutch support plate 219, and axial movement is afforded therebetween, permitting the locking collar 218 to move along the collar support teeth 265 of the clutch support plate 219. The actuation groove 257 is a circumferential groove formed in the outer surface of the locking collar 218 having a rectangular cross-section; however, any other shape may be used.

A collar actuator 258 is disposed in the second cavity 230 of the housing 222. The collar actuator 258 is a linear style hydraulic actuator disposed adjacent the clutching assembly. Such actuators are commonly known in the art. The collar actuator 258 includes a piston 259 sealingly disposed in a cavity 260 formed in the housing 222 and a shift fork 261 coupled to the collar actuator 258. A guide rod 262 disposed in the housing 222 ensures alignment of the piston 259 and the shift fork 261. A biasing member 263 disposed on the guide rod 262 urges the shift fork 261 towards the flanged ring gear 214. The cavity 260 is in fluid communication with a high pressure fluid source. Alternately, the collar actuator 258 may be a mechanical actuator, a pneumatic actuator, or an electrical actuator. The biasing member 263 returns the piston 259 to a disengaged position when the cavity 260 is not pressurized. The biasing member 263 is a coil spring; however, any other biasing member may be used.

The shift fork 261 is disposed on the guide rod 262 against the piston 259 and partially disposed in the actuation groove 257. The shift fork 261 is a rigid member preferably formed from a steel having a collar portion disposed on the guide rod 262 and a fork portion. The fork portion is bifurcated and has an arcuate shape corresponding to the actuation groove 257.

The clutch support plate 219 is an annular member concentrically disposed on the second end of the flanged ring gear 214 in the second cavity 230. The clutch support plate 219 is drivingly engaged with the flanged ring gear 214 and the locking collar 218. The clutch support plate 219 includes inner plate splines 264 formed on an inner surface thereof engaged with the toothed engagement portion 250. The clutch support plate 219 also includes the collar support teeth 265 formed on an outer surface thereof. The inner plate splines 264 drivingly engage the clutch support plate 219 and the flanged ring gear 214. As shown in FIG. 2, a thrust roller bearing 266 is disposed between the clutch support plate 219 and the housing 222. The thrust roller bearing 266 permits the clutch support plate 219 to be urged towards the flanged ring gear 214 by the clutch 220 while still able to rotate with the flanged ring gear 214 in respect to the housing 222. A thrust face 268 of the clutch support plate 219 is disposed against the clutch 220.

The clutch 220 is a plate style clutch disposed between the thrust face 268 of the clutch support plate 219 and a thrust plate 276 drivingly engaged with the transfer sleeve 212 in the second cavity 230. Alternately, the clutch 220 may be any other style of clutch known in the art. The clutch 220 comprises a first plurality of plates 270, a second plurality of plates 272, a clutch actuator 274, the thrust plate 276, and a thrust bearing 278.

The first plurality of plates 270 is drivingly engaged with a plurality of inner collar clutch teeth 269 formed in the clutch support plate 219. Accordingly, the first plurality of plates 270 is drivingly engaged with the flanged ring gear 214. A plurality of tabs formed along an outer peripheral edge of each of the plates 270 corresponds to the inner collar clutch teeth 269 formed in the clutch support plate 219. Each of the plates 270 is a clutch plate as is known in the art. As shown, the first plurality of plates 270 includes three plates, however, it is understood that any number of plates may form the first plurality of plates 270.

The second plurality of plates 272 is drivingly engaged with the second splined portion 238 of the transfer sleeve 212. A plurality of tabs formed along an inner peripheral edge of each of the plates 272 corresponds to the second splined portion 238 of the transfer sleeve 212. The second plurality of plates 272 is interleaved with the first plurality of plates 270. Each of the plates 272 is a clutch plate as is known in the art. As shown, the second plurality of plates 272 includes three plates, however, it is understood that any number of plates may form the second plurality of plates 272. The first plurality of plates 270 interleaved with the second plurality of plates 272 is known as a clutch pack 273.

The thrust plate 276 is a ring shaped plate disposed against the clutch pack 273 and drivingly engaged with the second splined portion 238 of the transfer sleeve 212. A plurality of thrust plate teeth 284 formed along an outer peripheral edge of the thrust plate 276 corresponds to the inner collar teeth 255 formed in the locking collar 218. The thrust plate 276 includes an annular support flange facing away from the clutch pack 273.

The thrust bearing 278 is a thrust roller bearing as is known in the art. The thrust bearing 278 is disposed between the clutch actuator 274 and the thrust plate 276 and held in position by the annular support flange of the thrust plate 276. The thrust bearing 278 comprises a plurality of radially spaced cylindrical rollers in a cage, however, other types of bearings may be used. When the clutch actuator 274 is engaged, the thrust bearing 278 is urged towards the clutch pack 273, transferring a force from the clutch actuator 274 to the thrust plate 276 through the thrust bearing 278.

The locking collar 218 may be positioned in a first position or a second position depending on an actuation of the collar actuator 258. In the first position, the cavity 260 is pressurized and the locking collar 218 is moved away from the flanged ring gear 214 to drivingly engage the thrust plate teeth 284 of the thrust plate 276 with inner collar teeth 255 of the locking collar 218. Accordingly, the flanged ring gear 214 and the transfer sleeve 212 are drivingly engaged, causing the transfer sleeve 212 to rotate concurrently with the flanged ring gear 214. In the second position, the pressure on the cavity 260 is released and the biasing member 262 urges the locking collar 218 towards the flanged ring gear 214, disengaging the locking collar 218 from the thrust plate 276. Accordingly, the flanged ring gear 214 is disengaged from the transfer sleeve 212, permitting the transfer sleeve 212 and the flanged ring gear 214 to rotate independently with respect to one another.

The clutch actuator 274 is a ring style hydraulic actuator. Such actuators are commonly known in the art. The clutch actuator 274 includes a piston 280 and a chamber 282 non-rotatably disposed in the second cavity 230 of the housing 222. The clutch actuator 274 is in fluid communication with a high pressure fluid source. Alternately, the clutch actuator 274 may be a mechanical actuator, a pneumatic actuator, or an electrical actuator.

When the clutch actuator 274 is engaged, the chamber 282 is pressurized and the piston 280 is moved towards the clutch pack 273 to apply pressure to the first plurality of plates 270 and the second plurality of plates 272. The pressure is resisted by the clutch support plate 219, the thrust roller bearing 266, and the housing 222. The pressure causes the first plurality of plates 270 to frictionally engage the second plurality of plates 272. The amount of pressure applied to the clutch pack 273 may be controlled to vary an amount of engagement between the first plurality of plates 270 and the second plurality of plates 272. Accordingly, the flanged ring gear 214 and the transfer sleeve 212 are variably drivingly engaged, transferring a portion of a torque transferred through the carrier of the center differential and the transfer sleeve 212 to the flanged ring gear 214 and the output shaft 16'. When the pressure on the chamber 282 is released, the frictional engagement between the first plurality of plates 270 and the second plurality of plates 272 decreases, and the second plurality of plates 272 begins to rotate independently from the first plurality of plates 270. Accordingly, the flanged ring gear 214 is disengaged from the transfer sleeve 212, permitting the transfer sleeve 212 and the flanged ring gear 214 to rotate independently with respect to one another.

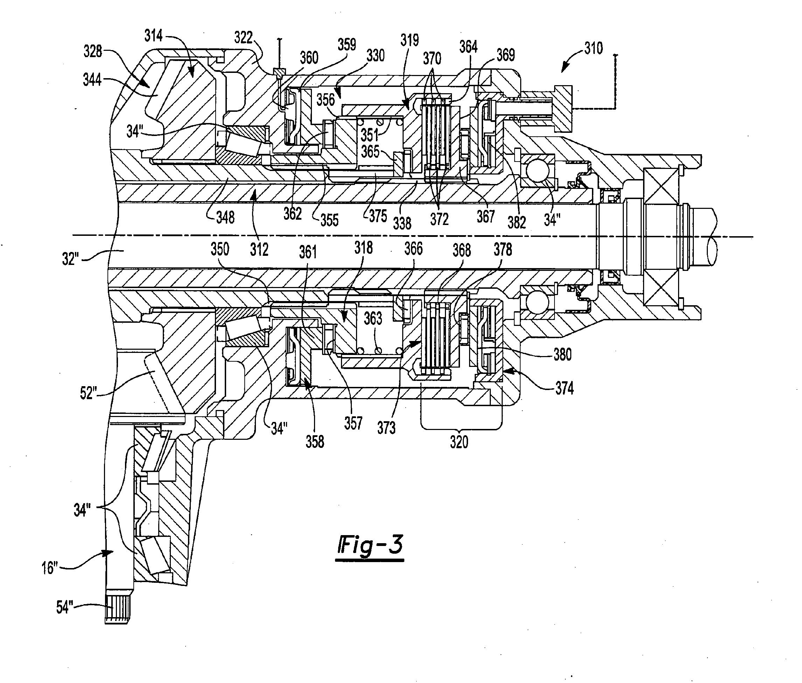

FIG. 3 shows an alternative embodiment of the power transfer unit 10. Similar structural features of the tandem drive axle system include the same reference numeral and a double prime (") symbol.

FIG. 3 illustrates a power transfer unit 310 for a vehicle according to an embodiment of the present invention. The power transfer unit 310 includes a transfer sleeve 312, a flanged ring gear 314, an output shaft 16", a locking collar 318, a clutch support plate 319, and a clutch 320 disposed in a housing 322. Preferably, the components 312, 314, 16", 318, 319 are formed from a hardened steel, however the components 312, 314, 16", 318, 319 may be formed from any other rigid material. The power transfer unit 310 is drivingly engaged with a carrier (not shown) of a center differential (not shown) of a transaxle (not shown), but it is understood the power transfer unit 310 may be drivingly engaged with other vehicle components or may be used in non-vehicular applications.

The transfer sleeve 312 is a hollow shaft concentrically disposed about the axle shaft 32" through a first cavity 328 and a second cavity 330 of the housing 322. The transfer sleeve 312 is similar to the transfer sleeve 212, illustrated in FIG. 2. The transfer sleeve 312 has a first splined portion (not shown) formed at a first end thereof and a second splined portion 338 formed at a second end thereof.

The flanged ring gear 314 is a gear concentric with and rotatably journaled about the transfer sleeve 312 in the first cavity 328 and the second cavity 330 of the housing 322. The flanged ring gear 314 is similar to the flanged ring gear 214, illustrated in FIG. 2. The flanged ring gear 314 includes a plurality of outer teeth 344 formed on a first end and a flanged portion 348 including a toothed engagement portion 350 at a second end thereof.

The locking collar 318 is an annular member concentrically disposed about the transfer sleeve 312 and drivingly engaged with the toothed engagement portion 350 of the the flanged ring gear 314 and the clutch support plate 319. Collectively, the locking collar 318, the clutch support plate 319, and the clutch 320 form a clutching assembly. The locking collar 318 includes inner collar teeth 355 and outer collar teeth 356. The inner collar teeth 355 are formed on an inner surface of the locking collar 318 and are engaged with the toothed engagement portion 350 of the flanged ring gear 314, and axial movement is afforded therebetween, permitting the locking collar 318 to move along the toothed engagement portion 350 of the flanged ring gear 314. The outer collar teeth 356 are formed on an outer surface of the locking collar 318 and are engaged with a plurality of inner plate teeth 351 of the clutch support plate 319. A biasing member 363 is disposed between the locking collar 318 and the clutch support plate 319. The biasing member 363 urges the locking collar towards the flanged ring gear 314. The locking collar 318 includes a collar thrust face 357 adjacent a collar actuator 358.

The collar actuator 358 is disposed in the second cavity 330 of the housing 322. The collar actuator 358 is a ring style hydraulic actuator disposed adjacent the clutching assembly. Such actuators are commonly known in the art. The collar actuator 358 includes a piston 359 sealingly disposed in a cavity 360 formed in the housing 322 and a first thrust plate 361 disposed against the piston 359. The cavity 360 is in fluid communication with a high pressure fluid source. Alternately, the collar actuator 358 may be a mechanical actuator, a pneumatic actuator, or an electrical actuator. The biasing member 363 returns the locking collar 318 and the piston 359 to a disengaged position when the cavity 360 is not pressurized. The biasing member 363 is a coil spring; however, any other biasing member may be used.

The first thrust plate 361 is an annular member disposed between the piston 359 and a first thrust roller bearing 362. The first thrust plate 361 is a rigid member having a flanged portion the first thrust roller bearing 362 is disposed against.

The clutch support plate 319 is a hollow annular member concentrically disposed about the transfer sleeve 312 in the second cavity 330. The clutch support plate 319 is drivingly engaged with the locking collar 318. The clutch support plate 319 includes inner plate teeth 351 formed at a first end on an inner surface thereof engaged with the outer collar teeth 356. The clutch support plate 319 also includes a plurality of first plate spines 364 formed at a second end on an inner surface thereof. As shown in FIG. 3, a second thrust roller bearing 366 is disposed between the clutch support plate 319 and a transfer sleeve support 365. The transfer sleeve support 365 is an annular member disposed about the transfer sleeve 312. The thrust roller bearing 366 permits the clutch support plate 319 to be urged towards the flanged ring gear 314 by a clutch actuator 374 while still able to rotate with the flanged ring gear 314 in respect to the housing 322.

A clutch support ring 367 is spliningly disposed on the second splined portion 338 of the transfer sleeve 312. The clutch support ring 367 is an annular member having a plurality of second plate splines 368 formed on an outer surface thereof. The clutch support ring 367 also includes a thrust face 369 disposed adjacent a clutch actuator 374.

The clutch 320 includes a plate style clutch disposed between the clutch support plate 319 and the clutch support ring 367 and the clutch actuator 374 disposed in the housing 322. The clutch 320 comprises a first plurality of plates 370, a second plurality of plates 372, the clutch actuator 374, and a thrust bearing 378. The first plurality of plates 370 is drivingly engaged with the first plate splines 364. The second plurality of plates 372 is drivingly engaged with the second plate splines 368. Alternately, the clutch 320 may be any other style of clutch known in the art.

The first plurality of plates 370 is drivingly engaged with the first plate splines 364 formed in the clutch support plate 319. Accordingly, the first plurality of plates 370 is drivingly engaged with the flanged ring gear 314. A plurality of tabs formed along an outer peripheral edge of each of the plates 370 corresponds to the first plate splines 364 formed in the clutch support plate 319. Each of the plates 370 is a clutch plate as is known in the art. As shown, the first plurality of plates 370 includes three plates, however, it is understood that any number of plates may form the first plurality of plates 370.

The second plurality of plates 372 is drivingly engaged with the clutch support ring 367. A plurality of tabs formed along an inner peripheral edge of each of the plates 372 corresponds to the second plate splines 368 of the clutch support ring 367. The second plurality of plates 372 is interleaved with the first plurality of plates 370. Each of the plates 372 is a clutch plate as is known in the art. As shown, the second plurality of plates 372 includes three plates, however, it is understood that any number of plates may form the second plurality of plates 372. The first plurality of plates 370 interleaved with the second plurality of plates 372 is known as a clutch pack 373.

The thrust bearing 378 is a thrust roller bearing as is known in the art. The thrust bearing 378 is disposed between a piston 380 of the clutch actuator 374 and the clutch support ring 367 and held in position by a support flange of the clutch support ring 367. The thrust bearing 378 comprises a plurality of radially spaced cylindrical rollers in a cage, however, other types of bearings may be used. When the clutch actuator 374 is engaged, the piston 380 is urged towards the clutch pack 373, transferring a force from the clutch actuator 374 to the clutch support ring 367 through the thrust bearing 378.

The locking collar 318 may be positioned in a first position or a second position depending on an actuation of the collar actuator 358. In the first position, the cavity 360 is pressurized and the locking collar 318 is moved away from the flanged ring gear 314 to drivingly engage a toothed sleeve 375 with the inner collar teeth 355. The toothed sleeve 375 is a collar spliningly engaged with the second splined portion 338 of the transfer sleeve 312. Accordingly, the flanged ring gear 314 and the transfer sleeve 312 are drivingly engaged, causing the transfer sleeve 312 to rotate concurrently with the flanged ring gear 314. In the second position, the pressure on the cavity 360 is released and the biasing member 362 urges the locking collar 318 towards the flanged ring gear 314, disengaging the locking collar 318 from the toothed sleeve 375. Accordingly, the flanged ring gear 314 is disengaged from the transfer sleeve 312, permitting the transfer sleeve 312 and the flanged ring gear 314 to rotate independently with respect to one another.

The clutch actuator 374 is a ring style hydraulic actuator. Such actuators are commonly known in the art. The clutch actuator 374 includes the piston 380 and a chamber 382 non-rotatably disposed in the second cavity 330 of the housing 322. The clutch actuator 374 is in fluid communication with a high pressure fluid source. Alternately, the clutch actuator 374 may be a mechanical actuator, a pneumatic actuator, or an electrical actuator.

When the clutch actuator 374 is engaged, the chamber 382 is pressurized and the piston 380 is moved towards the clutch pack 373 to apply pressure to the first plurality of plates 370 and the second plurality of plates 372. The pressure is resisted by the clutch support plate 319 and the first plurality of plates 370 frictionally engages the second plurality of plates 372. The amount of pressure applied to the clutch pack 373 may be controlled to vary an amount of engagement between the first plurality of plates 370 and the second plurality of plates 372. Accordingly, the flanged ring gear 314 and the transfer sleeve 312 are variably drivingly engaged, transferring a portion of a torque transferred through the carrier of the center differential and the transfer sleeve 312 to the flanged ring gear 314 and the output shaft 16". When the pressure on the chamber 382 is released, the frictional engagement between the first plurality of plates 370 and the second plurality of plates 372 decreases, and the second plurality of plates 372 begins to rotate independently from the first plurality of plates 370. Accordingly, the flanged ring gear 314 is disengaged from the transfer sleeve 312, permitting the transfer sleeve 312 and the flanged ring gear 314 to rotate independently with respect to one another.

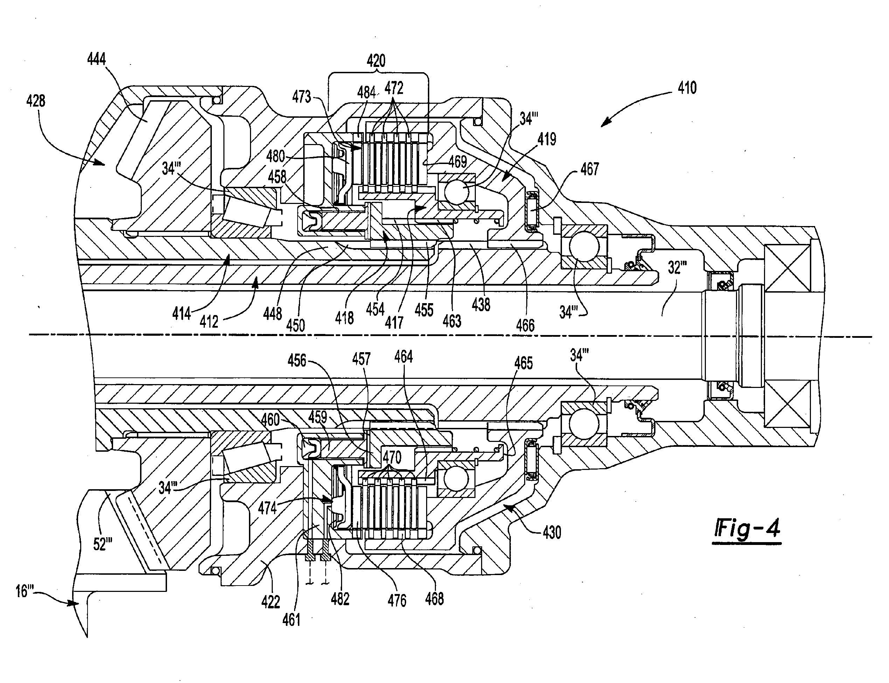

FIG. 4 shows an alternative embodiment of the power transfer unit 10. Similar structural features of the tandem drive axle system include the same reference numeral and a triple prime ("') symbol.

FIG. 4 illustrates a power transfer unit 410 for a vehicle according to an embodiment of the present invention. The power transfer unit 410 includes a transfer sleeve 412, a flanged ring gear 414, an output shaft 16"', a clutch support plate 417, a locking collar 418, a clutch housing 419, and a clutch 420 disposed in a housing 422. Preferably, the components 412, 414, 16"', 417, 418, 419 are formed from a hardened steel, however the components 412, 414, 16"', 417, 418, 419 may be formed from any other rigid material. The power transfer unit 410 is drivingly engaged with a carrier (not shown) of a center differential (not shown) of a transaxle (not shown), but it is understood the power transfer unit 410 may be drivingly engaged with other vehicle components or may be used in non-vehicular applications.

The transfer sleeve 412 is a hollow shaft concentrically disposed about the axle shaft 32'" through the first cavity 428 and the second cavity 430 of the housing 422. The transfer sleeve 412 is similar to the transfer sleeve 212, illustrated in FIG. 2. The transfer sleeve 412 has a first splined portion (not shown) formed at a first end thereof and a second splined portion 438 formed at a second end thereof.

The flanged ring gear 414 is a gear concentric with and rotatably journaled about the transfer sleeve 412 in the first cavity 428 and the second cavity 430 of the housing 422. The flanged ring gear 414 is similar to the flanged ring gear 214, illustrated in FIG. 2. The flanged ring gear 414 includes a plurality of outer teeth 444 formed on a first end and a flanged portion 448 including a toothed engagement portion 450 at a second end thereof.

The locking collar 418 is a hollow cylindrical member concentrically disposed about the transfer sleeve 412 and drivingly engaged with the flanged ring gear 414. The locking collar 418 includes outer collar teeth 454, inner collar teeth 455, a collar flange 456, and a collar thrust face 457. The outer collar teeth 454 are formed on an outer surface of the locking collar 418 and are engaged with clutch support plate 417, and axial movement is afforded therebetween. The inner collar teeth 455 are formed on an inner surface of the locking collar 418 and are engaged with the toothed engagement portion 450 of the flanged ring gear 414, and axial movement is afforded therebetween, permitting the locking collar 418 to move along the toothed engagement portion 450 of the flanged ring gear 414. The collar flange 456 is an annular protuberance formed at a first end of the locking collar 418 in an outer surface thereof adjacent a collar actuator 458. The collar flange 456 has a rectangular shaped cross-section; however, any other shape may be used. The collar thrust face 457 is formed at a first end of the locking collar 418 adjacent a collar actuator 458.

The clutch support plate 417 is a stepped hollow cylindrical member concentrically disposed about the transfer sleeve 412 and drivingly engaged with the locking collar 418 and the first plurality of plates 470 of the clutch 420. The clutch support plate 417 includes inner support teeth 463, first plate splines 464, and a biasing member flange 465. A portion of the clutch support plate 417 having the inner support teeth 463 formed thereon has a diameter smaller than a portion of the clutch support plate 417 having the first plate splines 464 formed thereon. The inner support teeth 463 are engaged with the outer collar teeth 454 of the locking collar 418, and axial movement is afforded therebetween, permitting the locking collar 418 to move along the inner support teeth 463. The first plate splines 464 are engaged with the first plurality of plates 470. The biasing member flange 465 is an annular protuberance formed at a first end of the clutch support plate 417 in the inner surface thereof adjacent the clutch housing 419.

The collar actuator 458 is disposed in the housing 422. The collar actuator 458 is a ring style hydraulic actuator disposed adjacent the locking collar 418. Such actuators are commonly known in the art. The collar actuator 458 includes a piston 459 sealingly disposed in a cavity 460 formed in an actuator housing 461. The actuator housing 461 is an annular member having a plurality of cavities formed therein non-rotatingly disposed in the second cavity 430 of the housing 422. The cavity 460 is in fluid communication with a high pressure fluid source. Alternately, the collar actuator 458 may be a mechanical actuator, a pneumatic actuator, or an electrical actuator.

The locking collar 418 may be positioned in a first position or a second position depending on an actuation of the collar actuator 458. In the first position, the cavity 460 is pressurized and the locking collar 418 is moved away from the flanged ring gear 414 to drivingly engage the second splined portion 438 of the transfer sleeve 412 with the inner collar teeth 455 of the locking collar 418. Accordingly, the flanged ring gear 414 and the transfer sleeve 412 are drivingly engaged, causing the transfer sleeve 412 to rotate concurrently with the flanged ring gear 414. In the second position, the pressure on the cavity 460 is released and the biasing member 465 urges the locking collar 418 towards the flanged ring gear 414, disengaging the locking collar 418 from the second splined portion 438 of the transfer sleeve 412. Accordingly, the flanged ring gear 414 is disengaged from the transfer sleeve 412, permitting the transfer sleeve 412 and the flanged ring gear 414 to rotate independently with respect to one another.

The clutch housing 419 is a cup shaped member having a central aperture formed therethrough concentrically disposed on the transfer sleeve 412 in the second cavity 430. The clutch housing 419 is drivingly engaged with the second splined portion 438 of the transfer sleeve 412 and the clutch 420. The clutch housing 419 includes housing splines 466 formed on an inner surface thereof engaged with the second splined portion 438. The clutch housing 419 also includes second plate splines 468 formed on the inner surface thereof engaged with a second plurality of plates 472 of the clutch 420. A bearing 34"' is disposed within the clutch housing 419. An outer race of the bearing 34"' is drivingly engaged with the inner surface of the clutch housing 419 and an inner race of the bearing 34'" is drivingly engaged with the outer surface of the clutch support plate 417. As shown in FIG. 4, a thrust roller bearing 467 is disposed between the clutch housing 419 and the housing 422. The thrust roller bearing 467 permits the clutch housing 419 to be urged away from the flanged ring gear 414 by a clutch actuator 474 while still able to rotate with the transfer sleeve 412 in respect to the housing 422. A thrust face 469 of the clutch housing 419 is formed on an inner surface of the clutch housing 419.

The clutch 420 is a plate style clutch disposed in the second cavity 430 of the housing 422. Alternately, the clutch 420 may be any other style of clutch known in the art. The clutch 420 comprises the first plurality of plates 470, the second plurality of plates 472, the clutch actuator 474, and a clutch thrust plate 476.

The first plurality of plates 470 is drivingly engaged with the first plate splines 464 formed in the clutch support plate 417. Accordingly, the first plurality of plates 470 is drivingly engaged with the locking collar 418 and the flanged ring gear 414. A plurality of tabs formed along an outer peripheral edge of each of the plates 470 corresponds to the first plate splines 464 formed in the clutch support plate 417. Each of the plates 470 is a clutch plate as is known in the art. As shown, the first plurality of plates 470 includes five plates, however, it is understood that any number of plates may form the first plurality of plates 470.

The second plurality of plates 472 is drivingly engaged with the second plate splines 468 of the clutch housing 419. A plurality of tabs formed along an inner peripheral edge of each of the plates 472 corresponds to the second plate splines 468 of the clutch housing 419. The second plurality of plates 472 is interleaved with the first plurality of plates 470. Each of the plates 472 is a clutch plate as is known in the art. As shown, the second plurality of plates 472 includes five plates, however, it is understood that any number of plates may form the second plurality of plates 472. The first plurality of plates 470 interleaved with the second plurality of plates 472 is known as a clutch pack 473.

The clutch thrust plate 476 is a ring shaped plate disposed against the clutch pack 473 and drivingly engaged with the actuator housing 461. A plurality of thrust plate teeth 484 formed along an outer peripheral edge of the clutch thrust plate 476 corresponds to the grooves formed in the actuator housing 461.

The clutch actuator 474 is a ring style hydraulic actuator. Such actuators are commonly known in the art. The clutch actuator 474 includes a piston 480 and a chamber 482, the piston 480 non-rotatably disposed in the actuator housing 461. The clutch actuator 474 is in fluid communication with a high pressure fluid source. Alternately, the clutch actuator 474 may be a mechanical actuator, a pneumatic actuator, or an electrical actuator.

When the clutch actuator 474 is engaged, the chamber 482 is pressurized and the piston 480 is moved towards the clutch pack 473 to apply pressure to the first plurality of plates 470 and the second plurality of plates 472 through the clutch thrust plate 476. The pressure is resisted by the clutch housing 419, the thrust roller bearing 467, and the housing 422. The pressure causes the first plurality of plates 470 to frictionally engage the second plurality of plates 472. The amount of pressure applied to the clutch pack 473 may be controlled to vary an amount of engagement between the first plurality of plates 470 and the second plurality of plates 472. Accordingly, the flanged ring gear 414 and the transfer sleeve 412 are variably drivingly engaged, transferring a portion of a torque transferred through the carrier of the center differential and the transfer sleeve 412 to the flanged ring gear 414 and the output shaft 16"'. When the pressure on the chamber 482 is released, the frictional engagement between the first plurality of plates 470 and the second plurality of plates 472 decreases, and the second plurality of plates 472 begins to rotate independently from the first plurality of plates 470. Accordingly, the flanged ring gear 414 is disengaged from the transfer sleeve 412, permitting the transfer sleeve 412 and the flanged ring gear 414 to rotate independently with respect to one another.

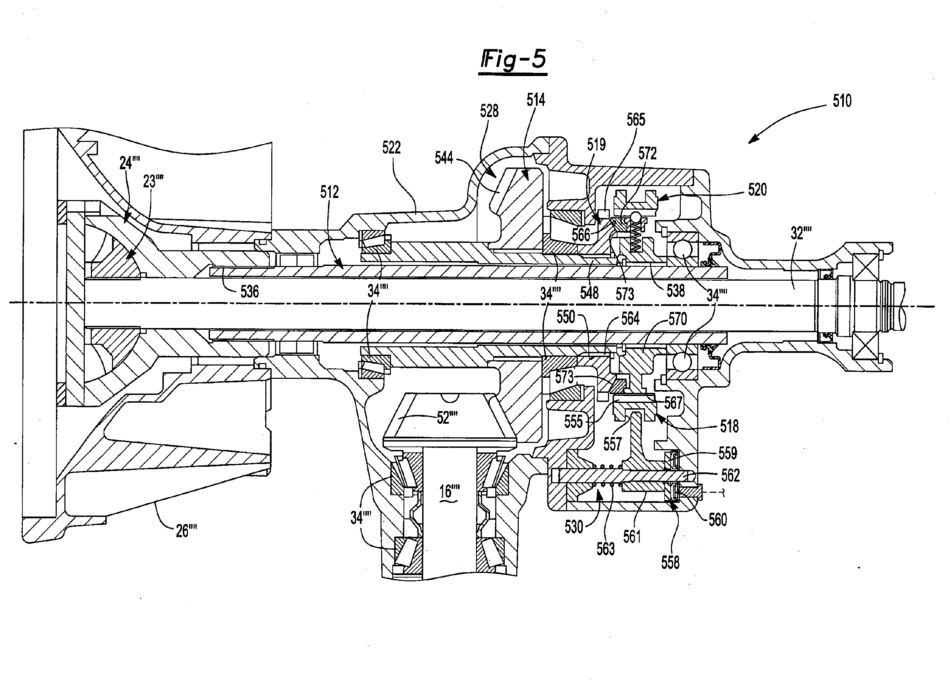

FIG. 5 shows an alternative embodiment of the power transfer unit 10. Similar structural features of the tandem drive axle system include the same reference numeral and a quadruple prime ("") symbol.

FIG. 5 illustrates a power transfer unit 510 for a vehicle according to an embodiment of the present invention. The power transfer unit 510 includes a transfer sleeve 512, a flanged ring gear 514, an output shaft 16"", an engagement member 519, and a synchro clutch 520 disposed in a housing 522. Preferably, the components 512, 514, 16"", 519 are formed from a hardened steel, however the components 512, 514, 16"", 519 may be formed from any other rigid material. The power transfer unit 510 is drivingly engaged with a carrier 23"" of a center differential 24"" of a transaxle 26"", but it is understood the power transfer unit 510 may be drivingly engaged with other vehicle components or may be used in non-vehicular applications.

The transfer sleeve 512 is a hollow shaft concentrically disposed about an axle shaft 32"" through the first cavity 528 and the second cavity 530 of the housing 522. The transfer sleeve 512 is similar to the transfer sleeve 212, illustrated in FIG. 2. The transfer sleeve 512 has a first splined portion 536 formed at a first end thereof drivingly engaged with the center differential 24"" and a second splined portion 538 formed at a second end thereof.

The flanged ring gear 514 is a gear concentric with and rotatably journaled about the transfer sleeve 512 in the first cavity 528 and the second cavity 530 of the housing 522. The flanged ring gear 514 is similar to the flanged ring gear 214, illustrated in FIG. 2. The flanged ring gear 514 includes a plurality of outer teeth 544 formed on a first end and a flanged portion 548 including a toothed engagement portion 550 at a second end thereof.

The engagement member 519 is an annular member concentrically disposed on the second end of the flanged ring gear 514 in the second cavity 530. The engagement member 519 is drivingly engaged with the flanged ring gear 514 and may be drivingly engaged with the synchro clutch 520. The engagement member 519 includes inner member splines 564 formed on an inner surface thereof engaged with the toothed engagement portion 550. The engagement member 519 also includes a plurality of collar engagement teeth 565 formed on an outer surface thereof. The engagement teeth 565 allow the synchro clutch 520 to drivingly engage engage the engagement member 519 and the flanged ring gear 514. A conical synchro surface 566 is formed on an outer surface of the engagement member 519, intermediate the inner member splines 564 and the collar engagement teeth 565. The conical synchro surface 566 permits the synchro clutch 520 to variably drivingly engage the engagement member 519 and the flanged ring gear 514.

The synchro clutch 520 is known in the art as a plain synchronizer. The synchro clutch 520 is disposed adjacent the engagement member 519 for drivingly engaging the transfer sleeve 512 and the flanged ring gear 514. The synchro clutch 520 comprises a locking collar 518, a sleeve engagement portion 570, a synchro ring 572, and a clutch actuator 558.

The locking collar 518 is a hollow cylindrical member concentrically disposed about the transfer sleeve 512 and drivingly engaged with the sleeve engagement portion 570 in the second cavity 530. The locking collar 518 includes inner collar teeth 555 and an actuation groove 557. The inner collar teeth 555 are formed on an inner surface of the locking collar 518 and are engaged with a plurality of outer member teeth 567 of the sleeve engagement portion 570, and axial movement is afforded therebetween, permitting the locking collar 518 to move along the outer member teeth 567 of the sleeve engagement portion 570. The actuation groove 557 is a circumferential groove formed in an outer surface of the locking collar 518 having a rectangular cross-section; however, any other shape may be used. An inner surface of the locking collar 518 has an indexing recess formed therein.

The sleeve engagement portion 570 is an annular member spliningly disposed on the second splined portion 538 of the transfer sleeve 512. The sleeve engagement portion 570 includes the outer member teeth 567 formed on an outer surface thereof. An outer surface of the sleeve engagement portion 570 facing the flanged ring gear 514 includes the synchro ring 572 disposed thereon. Axial movement is afforded between the sleeve engagement portion 570 and the transfer sleeve 512 to permit the synchro ring 572 to frictionally engage the conical synchro surface 566. At least one aperture formed in the sleeve engagement portion 570 contains a biasing member and an indexing member, the biasing member in a compressed state and urging the indexing member towards the locking collar 518 and into the indexing recess. When an axial force of a predetermined magnitude is provided to the locking collar 518, the indexing member is displaced into the aperture formed in the sleeve engagement portion 570 by the indexing recess and the biasing member is compressed, permitting the locking collar 518 to be moved towards the flanged ring gear 514 by the distance necessary for the inner collar teeth 555 to engage the collar engagement teeth 565. When an axial force less than the predetermined magnitude is provided to the locking collar 518, the indexing member and the biasing member resist the axial force, permitting the locking collar 518 to be moved towards the flanged ring gear 514 by the distance necessary for the synchro ring 572 to engage the conical synchro surface 566 formed on the outer surface of the engagement member 519.

The synchro ring 572 is an annular member coupled to the sleeve engagement portion 570. The synchro ring 572 and the engagement member 519 form a cone clutch. The synchro ring 572 is drivingly engaged with the sleeve engagement portion 570 and is axially moveable along the transfer sleeve 512. The synchro ring 572 has a conical engagement surface 573. Further, a biasing member (not shown) may be disposed between the synchro ring 572 and the sleeve engagement portion 570.

A clutch actuator 558 is disposed in the second cavity 530 of the housing 522. The clutch actuator 558 is a linear style hydraulic actuator disposed adjacent the synchro clutch 520. Such actuators are commonly known in the art. The clutch actuator 558 includes a piston 559 sealingly disposed in a cavity 560 formed in the housing 522 and a shift fork 561 coupled to the clutch actuator 558. A guide rod 562 disposed in the housing 522 ensures alignment of the piston 559 and the shift fork 561. A biasing member 563 disposed on the guide rod 562 urges the shift fork 561 towards the flanged ring gear 514. The cavity 560 is in fluid communication with a high pressure fluid source. Alternately, the clutch actuator 558 may be a mechanical actuator, a pneumatic actuator, or an electrical actuator. The biasing member 563 returns the piston 559 to a disengaged position when the cavity 560 is not pressurized. The biasing member 563 is a coil spring; however, any other biasing member may be used.

The shift fork 561 is disposed on the guide rod 562 and is partially disposed in the actuation groove 557. The shift fork 561 is a rigid member preferably formed from a steel. The shift fork 561 has a collar portion disposed on the guide rod 562 and a fork portion. The fork portion is bifurcated and has an arcuate shape corresponding to the actuation groove 557.

The locking collar 518 may be positioned in a first position or a second position depending on an actuation of the clutch actuator 558. When the cavity 560 is pressurized, the locking collar 518 is moved towards the flanged ring gear 514 and into the first position. The locking collar 518 urges the synchro ring 572 towards the flanged ring gear 514 while the synchro ring 572 remains drivingly engaged with the sleeve engagement portion 570. Before the locking collar is in the first position, the conical engagement surface 573 of the synchro ring 572 frictionally engages the conical synchro surface 566 of the engagement member 519, resulting in the transfer sleeve 512 being variably drivingly engaged with the flanged ring gear 514. Once the locking collar 518 is placed in the first position, the inner collar teeth 555 of the locking collar 518 are drivingly engaged with the collar engagement teeth 565 of the engagement member 519. Accordingly, the flanged ring gear 514 and the transfer sleeve 512 are drivingly engaged, causing the transfer sleeve 512 to rotate concurrently with the flanged ring gear 514. When the pressure on the cavity 560 is released, the biasing member 563 urges the locking collar 518 away from the flanged ring gear 514 and into the second position, as shown in FIG. 5. In the second position the locking collar 518 is disengaged from the engagement member 519. Accordingly, the flanged ring gear 514 is disengaged from the transfer sleeve 512, permitting the transfer sleeve 512 and the flanged ring gear 514 to rotate independently with respect to one another.

In use, the power transfer unit 10, 210, 310, 410, 510 permits the flanged ring gear 14, 214, 314, 414, 514 to be drivingly engaged with the transfer sleeve 12, 212, 312, 412, 512 using the locking collar 18, 218, 318, 418, 518. The power transfer unit 10, 210, 310, 410, 510 also permits the flanged ring gear 14, 214, 314, 414, 514 to be variably drivingly engaged with the transfer sleeve using the clutch 20, 220, 320, 420, 520.

When a vehicle the power transfer unit 10, 210, 310, 410, 510 is incorporated in is directed by an operator of the vehicle to engage a second axle of the vehicle (to enable an all wheel drive mode of operation or a part-time all wheel drive mode of operation), the clutch 20, 220, 320, 420, 520 is variably drivingly engaged to "spool up" the flanged ring gear 14, 214, 314, 414, 514 and the output shaft 16, 16', 16", 16"', 16"" and any other drivingly associated components. "Spooling up" permits the second axle to be engaged with the transaxle 26, 26"" through engagement of the locking collar 18, 218, 318, 418, 518 without requiring the transfer sleeve 12, 212, 312, 412, 512 (and thus the center differential 24, 24"") to be in a non-rotating state prior to engagement of the locking collar 18, 218, 318, 418, 518. Accordingly, the operator of the vehicle may shift the vehicle into the all wheel drive mode of operation or the part-time all wheel drive mode of operation "on the fly".

Such an ability is particularly advantageous when the vehicle encounters changing terrain (such as transitioning from a paved surface to an off-road environment) or during changing weather conditions. Further, the power transfer unit 10, 210, 310, 410, 510 may also increase a fuel economy of the vehicle the power transfer unit 10, 210, 310, 410, 510 is incorporated in by decreasing windage losses typically associated with a conventional drive train associated with a vehicle having an all wheel drive mode of operation or a part-time all wheel drive mode of operation.

In accordance with the provisions of the patent statutes, the present invention has been described in what is considered to represent its preferred embodiments. However, it should be noted that the invention can be practiced otherwise than as specifically illustrated and described without departing from the scope of the claims.

## Claims

1. A power transfer unit (10, 210, 310, 410, 510) for a vehicle, comprising:
a transfer sleeve (12, 212, 312, 412, 512) drivingly engaged with a carrier (23, 23"") of a center differential (24, 24"");
a flanged ring gear (14, 214, 314, 414, 514) concentric and rotatably journaled about the transfer sleeve (12, 212, 312, 412, 512);
an output shaft (16, 16', 16", 16"', 16"") drivingly engaged with the flanged ring gear (14, 214, 314, 414, 514); and
a clutching assembly supported on the transfer sleeve (12, 212, 312, 412, 512) comprising a locking collar (18, 218, 318, 418, 518) and a clutch (20, 220, 320, 420, 520), the locking collar (18, 218, 318, 418, 518) concentric with and axially moveable along the transfer sleeve (12, 212, 312, 412, 512) having a first position and a second position, the locking collar (18, 218, 318, 418, 518) in the first position drivingly engaging the flanged ring gear (14, 214, 314, 414, 514) with the transfer sleeve (12, 212, 312, 412, 512) and the locking collar (18, 218, 318, 418, 518) in the second position disengaging the flanged ring gear (14, 214, 314, 414, 514) from the transfer sleeve (12, 212, 312, 412, 512), wherein the clutch (20, 220, 320, 420, 520) may be variably engaged to transfer a portion of a torque transferred through the carrier (23, 23"") of the center differential (24, 24"") and the transfer sleeve (12, 212, 312, 412, 512) to the flanged ring gear (14, 214, 314, 414, 514) and the output shaft (16, 16', 16", 16"', 16"").

2. The power transfer unit (10, 210, 310, 410, 510) for a vehicle of claim 1, wherein the clutch (20, 220, 320, 420, 520) comprises a first plurality of plates (70, 270, 370, 470, 570) and a second plurality of plates (72, 272, 372, 472, 572), the first plurality of plates (70, 270, 370, 470, 570) drivingly associated with the transfer sleeve (12, 212, 312, 412, 512) and the second plurality of plates (72, 272, 372, 472, 572) drivingly associated with the flanged ring gear (14, 214, 314, 414, 514), the first plurality of plates (70, 270, 370, 470, 570) interleaved with the second plurality of plates (72, 272, 372, 472, 572).

3. The power transfer unit (10, 210, 310, 410, 510) for a vehicle of claim 1, wherein the locking collar (18, 218, 318, 418, 518) is disposed adjacent a first end of the flanged ring gear (14, 214, 314, 414, 514) and the clutch (20, 220, 320, 420, 520) is disposed adjacent a second end of the flanged ring gear (14, 214, 314, 414,514).

4. The power transfer unit (10, 210, 310, 410, 510) for a vehicle of claim 1, further comprising a clutch support plate (19, 219, 319, 417), the clutch support plate (19, 219, 319, 417) drivingly engaged with the flanged ring gear (14, 214, 314, 414, 514) and the clutch (20, 220, 320, 420, 520).

5. The power transfer unit (10, 210, 310, 410, 510) for a vehicle of claim 1, further comprising a clutch support plate (19, 219, 319, 417), the clutch support plate (19, 219, 319, 417) drivingly engaged with the flanged ring gear (14, 214, 314, 414, 514) and the locking collar (18, 218, 318, 418, 518), the locking collar (18, 218, 318, 418, 518) further engaged with the clutch (20, 220, 320, 420, 520).

6. The power transfer unit (10, 210, 310, 410, 510) for a vehicle of claim 1, further comprising a biasing member (62, 262, 363, 465, 563), the biasing member (62, 262, 363, 465, 563) urging the locking collar (18, 218, 318, 418, 518) into the second position.

7. The power transfer unit (10, 210, 310, 410, 510) for a vehicle of claim 1, further comprising a clutch support plate (19, 219, 319, 417), the clutch support plate (19, 219, 319, 417) drivingly engaged with the locking collar (18, 218, 318, 418, 518) and the clutch (20, 220, 320, 420, 520).

8. The power transfer unit (10, 210, 310, 410, 510) for a vehicle of claim 1, further comprising a clutch support plate (19, 219, 319, 417), the clutch support plate (19, 219, 319, 417) drivingly engaged with the transfer sleeve (12, 212, 312, 412, 512) and the clutch (20, 220, 320, 420, 520).

9. The power transfer unit for a vehicle of claim 1, wherein the output shaft (16, 16', 16", 16"', 16"") is substantially transverse to the transfer sleeve (12, 212, 312, 412, 512).

10. The power transfer unit (10, 210, 310, 410, 510) for a vehicle of claim 1, wherein the flanged ring gear (14, 214, 314, 414, 514) includes a toothed inner surface for drivingly engaging a toothed outer surface of the locking collar (18, 218, 318, 418, 518).

11. The power transfer unit (10, 210, 310, 410, 510) for a vehicle of claim 1, wherein the locking collar (18, 218, 318, 418, 518) includes a toothed inner surface for drivingly engaging the transfer sleeve (12, 212, 312, 412, 512) and the flanged ring gear (14, 214, 314, 414, 514) when the locking collar (18, 218, 318, 418, 518) is in the first position.

12. The power transfer unit (10, 210, 310, 410, 510) for a vehicle of claim 1, wherein the locking collar (18, 218, 318, 418, 518) includes a circumferential outer groove (57, 257, 557) for receiving a portion of an actuator (18, 218, 318, 418, 518).

13. The power transfer unit (10, 210, 310, 410, 510) for a vehicle of claim 1, further comprising a first actuator (74, 274, 374, 474) and a second actuator (58, 258, 358, 458, 558), the first actuator (74, 274, 374, 474) engaging the clutch (20, 220, 320, 420, 520) and the second actuator (58, 258, 358, 458, 558) moving the locking collar (18, 218, 318, 418, 518) from the second position to the first position.

14. The power transfer unit (10, 210, 310, 410, 510) for a vehicle of claim 1, further comprising a three piece housing (22, 222, 322, 422, 522) defining a first cavity (28, 228, 328, 428, 528) and a second cavity (30, 230, 330, 430, 530), the locking collar (18, 218, 318, 418, 518) and the output shaft (16, 16', 16", 16"', 16"") disposed in the first cavity (28, 228, 328, 428, 528), the clutch (20, 220, 320, 420, 520) disposed in the second cavity (30, 230, 330, 430, 530), and the transfer sleeve (12, 212, 312, 412, 512), and the flanged ring gear (14, 214, 314, 414, 514) disposed in both the first cavity (28, 228, 328, 428, 528) and the second cavity (30, 230, 330, 430, 530).

15. The power transfer unit (10, 210, 310, 410, 510) for a vehicle of claim 1, further comprising:
an axle shaft (32, 32', 32", 32"', 32"") connected to the center differential (24, 24"") at one end and a drive wheel at another end;
wherein the transfer sleeve (12, 212, 312, 412, 512) is disposed about the axle shaft (32, 32', 32", 32"', 32"");
the flanged ring gear (14, 214, 314, 414, 514) includes a toothed inner surface;
the locking collar (18, 218, 318, 418, 518) is drivingly engaged with the transfer sleeve (12, 212, 312, 412, 512);
the locking collar (18, 218, 318, 418, 518) includes a toothed outer surface for drivingly engaging the toothed inner surface of the flanged ring gear (14, 214, 314, 414, 514), the locking collar (18, 218, 318, 418, 518) is disposed adjacent a first end of the flanged ring gear (14, 214, 314, 414, 514);
the clutch (20, 220, 320, 420, 520) is disposed adjacent a second end of the flanged ring gear (14, 214, 314, 414, 514); and
a clutch support plate (19, 219, 319, 417) is drivingly engaged with the flanged ring gear (14, 214, 314, 414, 514) and the clutch (20, 220, 320, 420, 520).

## Patentansprüche

1. Kraftübertragungseinheit (10, 210, 310, 410, 510) für ein Fahrzeug, welche aufweist:
eine Übertragungsmanschette (12, 212, 312, 412, 512), die antriebsmäßig in Eingriff mit einem Träger (23, 23"") eines mittleren Differenzials (24, 24"") ist;
ein mit Flansch versehenes Tellerrad (14, 214, 314, 414, 514), das konzentrisch zu der und drehbar um die Übertragungsmanschette (12, 212, 312, 412, 512) ist;
eine Ausgangswelle (16, 16', 16", 16"', 16""), die antriebsmäßig in Eingriff mit dem mit Flansch versehenen Tellerrad (14, 214, 314, 414, 514) ist; und
eine Kupplungsanordnung, die auf der Übertragungsmanschette (12, 212, 312, 412, 512) gestützt ist, aufweisend einen Verriegelungskragen (18, 218, 318, 418, 518) und eine Kupplung (20, 220, 320, 420, 520), wobei der Verriegelungskragen (18, 218, 318, 418, 518) konzentrisch zu und axial entlang der Übertragungsmanschette (12, 212, 312, 412, 512) bewegbar mit einer ersten Position und einer zweiten Position ist, der Verriegelungskragen (18, 218, 318, 418, 518) in der ersten Position das mit Flansch versehene Tellerrad (14, 214, 314, 414, 514) mit der Übertragungsmanschette (12, 212, 312, 412, 512) in antriebsmäßigen Eingriff bringt, und der Verriegelungskragen (18, 218, 318, 418, 518) in der zweiten Position das mit Flansch versehene Tellerrad (14, 214, 314, 414, 514) und die Übertragungsmanschette (12, 212, 312, 412, 512) außer Eingriff bringt, und wobei die Kupplung (20, 220, 320, 420, 520) variabel in Eingriff gebracht werden kann, um einen Teil eines Drehmoments, das durch den Träger (23, 23"") des mittleren Differenzials (24, 24"") und die Übertragungsmanschette (12, 212, 312, 412, 512) übertragen wird, zu dem mit Flansch versehenen Tellerrad (14, 214, 314, 414, 514) und der Ausgangswelle (16, 16', 16", 16"', 16"") zu übertragen.

2. Kraftübertragungseinheit (10, 210, 310, 410, 510) für ein Fahrzeug nach Anspruch 1, bei der die Kupplung (20, 220, 320, 420, 520) mehrere erste Platten (70, 270, 370, 470, 570) und mehrere zweite Platten (72, 272, 372, 472, 572) aufweist, wobei die mehreren ersten Platten (70, 270, 370, 470, 570) antriebsmäßig mit der Übertragungsmanschette (12, 212, 312, 412, 512) assoziiert sind und die mehreren zweiten Platten (72, 272, 372, 472, 572) antriebsmäßig mit dem mit Flansch versehenen Tellerrad (14, 214, 314, 414, 514) assoziiert sind, und die mehreren ersten Platten (70, 270, 370, 470, 570) mit den mehreren zweiten Platten (72, 272, 372, 472, 572) verschachtelt sind.

3. Kraftübertragungseinheit (10, 210, 310, 410, 510) für ein Fahrzeug nach Anspruch 1, bei der der
Verriegelungskragen (18, 218, 318, 418, 518) benachbart einem ersten Ende des mit Flansch versehenen Tellerrads (14, 214, 314, 414, 514) angeordnet ist und die Kupplung (20, 220, 320, 420, 520) benachbart einem zweiten Ende des mit Flansch versehenen Tellerrads (14, 214, 314, 414, 514) angeordnet ist.

4. Kraftübertragungseinheit (10, 210, 310, 410, 510) für ein Fahrzeug nach Anspruch 1, weiterhin aufweisend eine Kupplungsstützplatte (19, 219, 319, 417), welche Kupplungsstützplatte (19, 219, 319, 417) antriebsmäßig in Eingriff mit dem mit Flansch versehenen Tellerrad (14, 214, 314, 414, 514) und der Kupplung (20, 220, 320, 420, 520) ist.

5. Kraftübertragungseinheit (10, 210, 310, 410, 510) für ein Fahrzeug nach Anspruch 1, weiterhin aufweisend eine Kupplungsstützplatte (19, 219, 319, 417), welche Kupplungsstützplatte (19, 219, 319, 417) in antriebsmäßigem Eingriff mit dem mit Flansch versehenen Tellerrad (14, 214, 314, 414, 514) und dem Verriegelungskragen (18, 218, 318, 418, 518) ist, wobei der Verriegelungskragen (18, 218, 318, 418, 518) weiterhin in Eingriff mit der Kupplung (20, 220, 320, 420, 520) ist.

6. Kraftübertragungseinheit (10, 210, 310, 410, 510) für ein Fahrzeug nach Anspruch 1, weiterhin aufweisend ein Vorspannteil (62, 262, 363, 465, 563), welches Vorspannteil (62, 262, 363, 465, 563) den Verriegelungskragen (18, 218, 318, 418, 518) in die zweite Position drückt.

7. Kraftübertragungseinheit (10, 210, 310, 410, 510) für ein Fahrzeug nach Anspruch 1, weiterhin aufweisend eine Kupplungsstützplatte (19, 219, 319, 417), welche Kupplungsstützplatte (19, 219, 319, 417) in antriebsmäßigem Eingriff mit dem Verriegelungskragen (18, 218, 318, 418, 518) und der Kupplung (20, 220, 320, 420, 520) ist.

8. Kraftübertragungseinheit (10, 210, 310, 410, 510) für ein Fahrzeug nach Anspruch 1, weiterhin aufweisend eine Kupplungsstützplatte (19, 219, 319, 417), welche Kupplungsstützplatte (19, 219, 319, 417) in antriebsmäßigem Eingriff mit der Übertragungsmanschette (12, 212, 312, 412, 512) und der Kupplung (20, 220, 320, 420, 520) ist.

9. Kraftübertragungseinheit für ein Fahrzeug nach Anspruch 1, bei der die Ausgangswelle (16, 16', 16", 16"', 16"") im Wesentlichen quer zu der Übertragungsmanschette (12, 212, 312, 412, 512) ist.

10. Kraftübertragungseinheit (10, 210, 310, 410, 510) für ein Fahrzeug nach Anspruch 1, bei der das mit Flansch versehene Tellerrad (14, 214, 314, 414, 514) eine gezahnte innere Oberfläche für den antriebsmäßigen Eingriff mit einer gezahnten äußeren Oberfläche des Verriegelungskragens (18, 218, 318, 418, 518) enthält.

11. Kraftübertragungseinheit (10, 210, 310, 410, 510) für ein Fahrzeug nach Anspruch 1, bei der der Verriegelungskragen (18, 218, 318, 418, 518) eine gezahnte innere Oberfläche für ein antriebsmäßiges Ineingriffbringen der Übertragungsmanschette (12, 212, 312, 412, 512) und des mit Flansch versehenen Tellerrads (14, 214, 314, 414, 514), wenn der Verriegelungskragen (18, 218, 318, 418, 518) in der ersten Position ist, enthält.

12. Kraftübertragungseinheit (10, 210, 310, 410, 510) für ein Fahrzeug nach Anspruch 1, bei der der Verriegelungskragen (18, 218, 318, 418, 518) eine äußere Umfangsnut (57, 257, 557) für die Aufnahme eines Bereichs eines Betätigungsteils (18, 218, 318, 418, 518) enthält.

13. Kraftübertragungseinheit (10, 210, 310, 410, 510) für ein Fahrzeug nach Anspruch 1, weiterhin aufweisend ein erstes Betätigungsteil (74, 274, 374, 474) und ein zweites Betätigungsteil (58, 258, 358, 458, 558), wobei das erste Betätigungsteil (74, 274, 374, 474) in Eingriff mit der Kupplung (20, 220, 320, 420, 520) tritt und das zweite Betätigungsteil (58, 258, 358, 458, 558) den Verriegelungskragen (18, 218, 318, 418, 518) aus der zweiten Position in die erste Position bewegt.

14. Kraftübertragungseinheit (10, 210, 310, 410, 510) für ein Fahrzeug nach Anspruch 1, weiterhin aufweisend ein dreistückiges Gehäuse (22, 222, 322, 422, 522), das einen ersten Hohlraum (28, 228, 328, 428, 528) und einen zweiten Hohlraum (30, 230, 330, 430, 530) definiert, wobei der Verriegelungskragen (18, 218, 318, 418, 518) und die Ausgangswelle (16, 16', 16", 16"', 16"") in dem ersten Hohlraum (28, 228, 328, 428, 528) angeordnet sind, die Kupplung (20, 220, 320, 420, 520) in dem zweiten Hohlraum (30, 230, 330, 430, 530) angeordnet ist, und die Übertragungsmanschette (12, 212, 312, 412, 512) und das mit Flansch versehene Tellerrad (14, 214, 314, 414, 514) sowohl in dem ersten Hohlraum (28, 228, 328, 428, 528) als auch in dem zweiten Hohlraum (30, 230, 330, 430, 530) angeordnet sind.

15. Kraftübertragungseinheit (10, 210, 310, 410, 510) für ein Fahrzeug nach Anspruch 1, weiterhin aufweisend:
eine Achswelle (32, 32', 32", 32"', 32""), die mit dem mittleren Differenzial (24, 24"") an einem Ende und einem Antriebsrad an einem anderen Ende verbunden ist;
wobei die Übertragungsmanschette (12, 212, 312, 412, 512) um die Achswelle (32, 32', 32", 32"', 32"") angeordnet ist;
das mit Flansch versehene Tellerrad (14, 214, 314, 414, 514) eine gezahnte innere Oberfläche enthält;
der Verriegelungskragen (18, 218, 318, 418, 518) in antriebsmäßigem Eingriff mit der Übertragungsmanschette (12, 212, 312, 412, 512) ist;
der Verriegelungskragen (18, 218, 318, 418, 518) eine gezahnte äußere Oberfläche für den antriebsmäßigen Eingriff mit der gezahnten inneren Oberfläche des mit Flansch versehenen Tellerrads (14, 214, 314, 414, 514) enthält, und der Verriegelungskragen (18, 218, 318, 418, 518) benachbart einem ersten Ende des mit Flansch versehenen Tellerrads (14, 214, 314, 414, 514) angeordnet ist;
die Kupplung (20, 220, 320, 420, 520) benachbart einem zweiten Ende des mit Flansch versehenen Tellerrads (14, 214, 314, 414, 514) angeordnet ist; und
eine Kupplungsstützplatte (19, 219, 319, 417) in antriebsmäßigem Eingriff mit dem mit Flansch versehenen Tellerrad (14, 214, 314, 414, 514) und der Kupplung (20, 220, 320, 420, 520) ist.

## Revendications

1. Unité de transfert de puissance (10, 210, 310, 410, 510) pour un véhicule, comprenant :
un tube de transfert (12, 212, 312, 412, 512) engagé par entraînement avec un support (23, 23"") d'un différentiel central (24, 24"") ;
un pignon de flasque (14, 214, 314, 414, 514) concentrique au tube de transfert (12, 212, 312, 412, 512) et pouvant tourner librement en rotation autour de celui-ci ;
un arbre de sortie (16, 16', 16", 16"', 16"") engagé par entraînement avec le pignon de flasque (14, 214, 314, 414, 514) ; et
un assemblage d'embrayage supporté sur le tube de transfert (12, 212, 312, 412, 512) comprenant un collier de verrouillage (18, 218, 318, 418, 518) et un embrayage (20, 220, 320, 420, 520), le collier de verrouillage (18, 218, 318, 418, 518) étant concentrique au tube de transfert (12, 212, 312, 412, 512) et mobile axialement par rapport à celui-ci et présentant une première position et une seconde position, le collier de verrouillage (18, 218, 318, 418, 518) dans la première position engageant par entraînement le pignon de flasque (14, 214, 314, 414, 514) avec le tube de transfert (12, 212, 312, 412, 512) et le collier de verrouillage (18, 218, 318, 418, 518) dans la seconde position désengageant le pignon de flasque (14, 214, 314, 414, 514) du tube de transfert (12, 212, 312, 412, 512), dans laquelle l'embrayage (20, 220, 320, 420, 520) peut être engagé de façon variable afin de transférer une partie d'un couple transféré par l'intermédiaire du support (23, 23"") du différentiel central (24, 24"") et du tube de transfert (12, 212, 312, 412, 512) au pignon de flasque (14, 214, 314, 414, 514) et à l'arbre de sortie (16, 16', 16", 16"', 16"").

2. Unité de transfert de puissance (10, 210, 310, 410, 510) pour un véhicule selon la revendication 1, dans laquelle l'embrayage (20, 220, 320, 420, 520) comprend une première pluralité de plaques (70, 270, 370, 470, 570) et une seconde pluralité de plaques (72, 272, 372, 472, 572), les plaques de la première pluralité de plaques (70, 270, 370, 470, 570) étant associées par entraînement avec le tube de transfert (12, 212, 312, 412, 512) et les plaques de la seconde pluralité de plaques (72, 272, 372, 472, 572) étant associées par entraînement avec le pignon de flasque (14, 214, 314, 414, 514), les plaques de la première pluralité de plaques (70, 270, 370, 470, 570) étant empilées en alternance avec les plaques de la seconde pluralité de plaques (72, 272, 372, 472, 572).

3. Unité de transfert de puissance (10, 210, 310, 410, 510) pour un véhicule selon la revendication 1, dans laquelle le collier de verrouillage (18, 218, 318, 418, 518) est disposé de manière à être adjacent à une première extrémité du pignon de flasque (14, 214, 314, 414, 514) et l'embrayage (20, 220, 320, 420, 520) est disposé de manière à être adjacent à une seconde extrémité du pignon de flasque (14, 214, 314, 414, 514).

4. Unité de transfert de puissance (10, 210, 310, 410, 510) pour un véhicule selon la revendication 1, comprenant en outre une plaque de support d'embrayage (19, 219, 319, 417), la plaque de support d'embrayage (19, 219, 319, 417) étant engagée par entraînement avec le pignon de flasque (14, 214, 314, 414, 514) et l'embrayage (20, 220, 320, 420, 520).

5. Unité de transfert de puissance (10, 210, 310, 410, 510) pour un véhicule selon la revendication 1, comprenant en outre une plaque de support d'embrayage (19, 219, 319, 417), la plaque de support d'embrayage (19, 219, 319, 417) étant engagée par entraînement avec le pignon de flasque (14, 214, 314, 414, 514) et le collier de verrouillage (18, 218, 318, 418, 518), le collier de verrouillage (18, 218, 318, 418, 518) étant en outre engagé avec l'embrayage (20, 220, 320, 420, 520).

6. Unité de transfert de puissance (10, 210, 310, 410, 510) pour un véhicule selon la revendication 1, comprenant en outre un élément de poussée (62, 262, 363, 465, 563), l'élément de poussée (62, 262, 363, 465, 563) poussant le collier de verrouillage (18, 218, 318, 418, 518) dans la seconde position.

7. Unité de transfert de puissance (10, 210, 310, 410, 510) pour un véhicule selon la revendication 1, comprenant en outre une plaque de support d'embrayage (19, 219, 319, 417), la plaque de support d'embrayage (19, 219, 319, 417) étant engagée par entraînement avec le collier de verrouillage (18, 218, 318, 418, 518) et l'embrayage (20, 220, 320, 420, 520).

8. Unité de transfert de puissance (10, 210, 310, 410, 510) pour un véhicule selon la revendication 1, comprenant en outre une plaque de support d'embrayage (19, 219, 319, 417), la plaque de support d'embrayage (19, 219, 319, 417) étant engagée par entraînement avec le tube de transfert (12, 212, 312, 412, 512) et l'embrayage (20, 220, 320, 420, 520).

9. Unité de transfert de puissance pour un véhicule selon la revendication 1, dans laquelle l'arbre de sortie (16, 16', 16", 16"', 16"") est sensiblement transversal au tube de transfert (12, 212, 312, 412, 512).

10. Unité de transfert de puissance (10, 210, 310, 410, 510) pour un véhicule selon la revendication 1, dans laquelle le pignon de flasque (14, 214, 314, 414, 514) inclut une surface interne dentée pour engager par entraînement une surface externe dentée du collier de verrouillage (18, 218, 318, 418, 518).

11. Unité de transfert de puissance (10, 210, 310, 410, 510) pour un véhicule selon la revendication 1, dans laquelle le collier de verrouillage (18, 218, 318, 418, 518) inclut une surface interne dentée pour engager par entraînement le tube de transfert (12, 212, 312, 412, 512) et le pignon de flasque (14, 214, 314, 414, 514) lorsque le collier de verrouillage (18, 218, 318, 418, 518) est dans la première position.

12. Unité de transfert de puissance (10, 210, 310, 410, 510) pour un véhicule selon la revendication 1, dans laquelle le collier de verrouillage (18, 218, 318, 418, 518) inclut une gorge externe circonférentielle (57, 257, 557) pour recevoir une partie d'un actionneur (18, 218, 318, 418, 518).

13. Unité de transfert de puissance (10, 210, 310, 410, 510) pour un véhicule selon la revendication 1, comprenant en outre un premier actionneur (74, 274, 374, 474) et un second actionneur (58, 258, 358, 458, 558), le premier actionneur (74, 274, 374, 474) engageant l'embrayage (20, 220, 320, 420, 520) et le second actionneur (58, 258, 358, 458, 558) déplaçant le collier de verrouillage (18, 218, 318, 418, 518) de la seconde position à la première position.

14. Unité de transfert de puissance (10, 210, 310, 410, 510) pour un véhicule selon la revendication 1, comprenant en outre un boîtier à trois pièces (22, 222, 322, 422, 522) définissant une première cavité (28, 228, 328, 428, 528) et une seconde cavité (30, 230, 330, 430, 530), le collier de verrouillage (18, 218, 318, 418, 518) et l'arbre de sortie (16, 16', 16", 16"', 16"") étant disposés dans la première cavité (28, 228, 328, 428, 528), l'embrayage (20, 220, 320, 420, 520) étant disposé dans la seconde cavité (30, 230, 330, 430, 530), et le tube de transfert (12, 212, 312, 412, 512) et le pignon de flasque (14, 214, 314, 414, 514) étant disposés à la fois dans la première cavité (28, 228, 328, 428, 528) et la seconde cavité (30, 230, 330, 430, 530).

15. Unité de transfert de puissance (10, 210, 310, 410, 510) pour un véhicule selon la revendication 1, comprenant en outre :
un arbre d'axe (32, 32', 32", 32"', 32"") connecté au différentiel central (24, 24"") au niveau d'une première extrémité et à une roue motrice au niveau d'une autre extrémité ; dans laquelle :
le tube de transfert (12, 212, 312, 412, 512) est disposé autour de l'arbre d'axe (32, 32', 32", 32"', 32"") ;
le pignon de flasque (14, 214, 314, 414, 514) inclut une surface interne dentée ;
le collier de verrouillage (18, 218, 318, 418, 518) est engagé par entraînement avec le tube de transfert (12, 212, 312, 412, 512) ;
le collier de verrouillage (18, 218, 318, 418, 518) inclut une surface externe dentée pour engager par entraînement la surface interne dentée du pignon de flasque (14, 214, 314, 414, 514), le collier de verrouillage (18, 218, 318, 418, 518) est disposé de manière à être adjacent à une première extrémité du pignon de flasque (14, 214, 314, 414, 514) ;
l'embrayage (20, 220, 320, 420, 520) est disposé de manière à être adjacent à une seconde extrémité du pignon de flasque (14, 214, 314, 414, 514) ; et
une plaque de support d'embrayage (19, 219, 319, 417) est engagée par entraînement avec le pignon de flasque (14, 214, 314, 414, 514) et l'embrayage (20, 220, 320, 420, 520).
